(19) **Europäisches Patentamt**
**European Patent Office**
**Office européen des brevets**

(11) **EP 2 872 303 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(21) Anmeldenummer: **13735031.0**

(22) Anmeldetag: **10.07.2013**

(51) Int Cl.:
**B28C 5/02** (2006.01)          **C04B 24/38** (2006.01)
**C04B 28/04** (2006.01)          **C04B 111/00** (2006.01)

(86) Internationale Anmeldenummer:
**PCT/EP2013/064589**

(87) Internationale Veröffentlichungsnummer:
**WO 2014/009417 (16.01.2014 Gazette 2014/03)**

(54) **NASSSPRITZVERFAHREN ZUR HERSTELLUNG VON SPRITZBETON**

WET SPRAYING METHOD FOR PRODUCING SPRAYED CONCRETE

PROCÉDÉ DE PROJECTION PAR VOIE HUMIDE POUR LA FABRICATION DE BETON PROJETE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2012 AT 502772012**

(43) Veröffentlichungstag der Anmeldung:
**20.05.2015 Patentblatt 2015/21**

(73) Patentinhaber: **Südzucker AG Mannheim/ Ochsenfurt**
**68165 Mannheim (DE)**

(72) Erfinder:
• **MANN, Karl-Jürgen**
**A-1150 Wien (AT)**
• **HAJI BEGLI, Alireza**
**67305 Ramsen (DE)**

• **WASTYN, Marnik, Michel**
**A-2320 Schwechat (AT)**

(74) Vertreter: **Sonn & Partner Patentanwälte**
**Riemergasse 14**
**1010 Wien (AT)**

(56) Entgegenhaltungen:
**EP-A1- 0 824 093     EP-A2- 0 519 155**
**EP-A2- 2 412 690     WO-A1-2012/042012**
**AT-B- 403 277       DE-A1- 4 324 334**
**GB-A- 2 347 414     JP-A- 2001 261 397**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft die Verwendung eines Zusatzmittels für Spritzbeton im Nassspritzverfahren, zur Herabsetzung des Rückpralls sowie vorzugsweise zur Regelung des W/Z-abhängigen Fließverhaltens des Spritzbetons während der Verarbeitung. Die Erfindung betrifft weiters die Herstellung eines für das Nassspritzverfahren modifizierten Spritzbetons, sowie dessen Verwendung im Nassspritzverfahren unter Verwendung des Zusatzmittels zur Aufbringung von Spritzbeton.

Für die Applikation von Spritzbeton bzw. Spritzzementmörtel sind das Trockenspritzverfahren und das Nassspritzverfahren bereits bekannt.

Wesentliche Kriterien bei der Anwendung dieser Verfahren sind die Herabsetzung der Staubentwicklung bei der Verarbeitung an der Baustelle, die Verminderung des Rückpralls, was sich sowohl in wirtschaftlicher Hinsicht bei der Kalkulation der Baustellenkosten als auch in ökologischer Hinsicht bei der Entsorgung der durch den Rückprall entstehenden Abfallprodukte äußert, und die Erzielung hoher Frühfestigkeiten im jungen Beton. Zudem sollen Betonqualität und Betonkonsistenz möglichst gleichmäßig sein.

Die PCT-Anmeldung WO 96/14275 ist ein Beispiel für das Bestreben, die Eigenschaften von Spritzbetonmassen im Hinblick auf verminderte Staubbildung, herabgesetzten Rückprall und Konsistenzregelung zu beeinflussen. Das dort vorgeschlagene Spritzbetonsystem enthält ein Sol-Gel-Zusatzmittel auf der Basis einer Metallverbindung, die bei Elektrolytzugabe oder Erhöhung des pH-Wertes geliert. Dieser Zusatz erlaubt das deutliche Überschreiten des für die Betonqualität optimalen W/Z-Wertes und ist daher mit der gewohnten Arbeitsweise der Düsenführer nicht verträglich.

Die JP 03 223 139 A betrifft ein Zusatzmittel für Beton, welches einen wasserlöslichen Zelluloseether enthält, welcher in einer 2%igen wässrigen Lösung bei 20°C eine Viskosität von 5000-50000 cps aufweist, sowie einen Schaumverhinderer. Ziel der Entwicklung gemäß diesem Dokument ist eine Verminderung der Staubentwicklung sowie eine Verminderung des Rückpralls bei Spritzbeton. Der Zusatz soll nun die Bildung von "air borne dust" verringern, und zwar in direktem Zusammenhang mit der Viskosität des Zusatzes. Von Zusatzmitteln mit einer Viskosität von unter 5000 cps wird ausdrücklich abgeraten, auch werden lediglich wasserlösliche Zelluloseether zur Verminderung der Staubentwicklung geeignet geoffenbart. Da diese wasserlöslichen Zelluloseether in Beton Luft einschließen können, muss zusätzlich noch ein Schaumverhinderer zugesetzt werden.

Gemäß der JP 05 105 493 A wird durch einen Zusatz von Zelluloseethern die Staubentwicklung bei Spritzbetonen verringert, das W/Z-Verhältnis hingegen wird durch den Zusatz von Polycarbonsäuresalzen beeinflusst.

Die AT 403 277 B beschreibt die Verwendung von nativer oder derivatisierter Kartoffelstärke als Verdickungsmittel, Wasserretentionsverbesserungsmittel bzw. Verarbeitungsmittel in Baustoffen, insbesondere in Spritzputzen.

Hinsichtlich der Staubbelastung bei der Verarbeitung von Betonen ist es aus der EP 0 076 927 A1 bekannt, dass bei Verwendung von Aluminiumhydroxid als alkalifreier Abbindebeschleuniger für hydraulische Bindemittel eine Verringerung des Staubens, u.a. auch bei Spritzbeton, zu beobachten ist, wenn der Masse wasserquellbare Cellulose-Derivate, wie Hydroxyalkylcellulosen, zugesetzt werden.

Aus der EP 0 824 093 B1 geht die Verwendung von modifizierter und/oder chemisch derivatisierter, natürlicher oder biotechnologisch hergestellter Stärke als Zusatzmittel für Spritzbeton hervor. Zwar betrifft diese Offenbarung an sich das Trockenspritzverfahren, es wird jedoch auch die Möglichkeit des Zusatzes der Stärkederivate entweder zum Zement, zu Zuschlagstoffen, den Betonverflüssigern, den Beschleunigern, im Transportbetonmischwerk, im Mischwerk vor Ort oder in der mobilen Spritzbetonmaschine vor Ort in einem Nassspritzverfahren erwähnt. Die Art der Zugabe, die für die Erfüllung der vorstehend genannten Kriterien entscheidend ist, wird hierin jedoch nicht beschrieben. So wird auf Basis der Lehre von EP 0 824 093 B1 durch eine ungeeignete Zugabe der Stärke das Nassspritzverfahren zu keinen zufriedenstellenden Ergebnissen führen oder sogar versagen.

Es ist eine Aufgabe der vorliegenden Erfindung, die sich aus dem Stand der Technik ergebenden Nachteile zu vermeiden oder zumindest zu verringern und eine Methode zur Herstellung eines für das Nassspritzverfahren modifizierten Spritzbetons, sowie ein Verfahren zu dessen Verwendung im Nassspritzverfahren zur Aufbringung von Spritzbeton unter Verwendung der beschriebenen Zusatzmittel anzugeben.

Die Aufgabe wird dadurch gelöst, dass in dem Nassspritzverfahren zur Herstellung von Spritzbeton unter Verwendung von modifizierter und/oder chemisch derivatisierter, natürlicher oder biotechnologisch hergestellter Stärke, gegebenenfalls in Mischung untereinander und mit als Baustoffzusatzmittel bekannten Additiven als Zusatzmittel, das Zusatzmittel gleichzeitig mit einem Beschleuniger im Bereich einer den Spritzbeton abgebenden Düse in einen den wässrigen Beton transportierenden Druckluft-Förderstrom eingebracht wird. Die Zugabe der beschriebenen Additive kann sowohl wässrige Lösung als auch in Pulverform erfolgen.

Bei einem Trockenspritzverfahren wird das für die Erzeugung des Spritzbetons erforderliche Trockengemisch einer Düse für die Abgabe des Spritzbetons zugeführt und im Bereich dieser Düse mit ebenfalls der Düse zugeführtem Wasser vermischt. Hierbei ist es, wie Versuche zeigten, vorteilhaft, die Stärke und ein die Hydratation des Betons beschleunigendes Agens bereits in das Trockengemisch einzubringen.

Im Rahmen dieser Versuche wurden modifizierte Stärkeproudkte wie z.B. Amitrolit 8865 (AGRANA, AT) auf seine Eignung zur Verminderung von Rückprall und Staub im Spritzbeton untersucht. Hierbei wurde Stärkeether sowohl als Pulver als auch im Spritzwasser gelöst der Spritzbetonformulierung zugeführt. Es hat sich hierbei gezeigt, dass die Zugabe von 0,2% Stärkeether/Zement in die Trockenmischung die besten Ergebnisse bei gleichzeitig geringem Aufwand erzielte. Die Zugabe zum Spritzwasser brachte keine zufriedenstellenden Ergebnisse.

Im Gegensatz hierzu wird im Falle eines Nassspritzverfahrens der fertige Beton (aus dem Transportbetonwerk oder vor Ort angemischt), versetzt mit diversen Additiven zur Einstellung und Aufrechterhaltung einer geeigneten Betonkonsistenz, üblicherweise mittels einer Betonpumpe im Dichtstromverfahren zur Düse gefördert. An der Düse wird der Beton mit Druckluft beschleunigt und an die Auftragsunterlage, z.B. Fels, appliziert. Es ist hierbei im Unterschied zum Trockenspritzverfahren wesentlich, dass die Stärke nicht bereits dem frischen Betongemisch beigemengt wird, da auf Grund des hohen Viskositätsanstiegs ein nicht mehr verarbeitbarer Beton entsteht. Durch den Stärke-Zusatzauftretende Verbesserungen der Betonrheologie und ein Strukturaufbau im Frischbeton werden durch Scherkräfte, wie sie beim Anmischen und Transportieren von Beton auftreten, deutlich vermindert oder sogar ausgelöscht. Stattdessen wird die Stärke gemäß der Erfindung erst zu einem möglichst späten Zeitpunkt, vorteilhafter Weise in die Düse eingebracht. Hier wird sie dem wässrigen Beton entweder als wässrige Lösung oder als Pulver zugeführt, vorteilhafterweise wird sie zur besseren Einmischung mit der Druckluft direkt in den Beton eingeblasen und dadurch auch fein verteilt. Durch die Verwendung spezieller Umlenkdüsen kann eine noch homogenere Verteilung der Additive während der kurzen Verweilzeit in der Düse erreicht werden.

Die Zugabe eines Beschleunigers (BE) bewirkt die rasche Verfestigung des Spritzbetons, sobald dieses Additiv mit Beton in Kontakt gelangt. Aus diesem Grund kann auch der Beschleuniger nicht bereits dem Frischbeton beigemengt werden, da dies im Wesentlichen die sofortige Aushärtung des Spritzbetons im Mischwerk, in der Betonpumpe oder in der Zuführung zur Düse zur Folge hätte. Auch der Beschleuniger wird daher erst zu einem möglichst späten Zeitpunkt, vorteilhafter Weise als wässrige Suspension, in die Düse eingebracht.

Bekannter Weise sind die meisten Stärkeprodukte mit Beschleunigern nicht kompatibel und können z.B. Niederschläge bilden. Es wäre daher zu erwarten, dass das gleichzeitige Einbringen von sowohl dem Beschleuniger als auch der Stärke in die Düse einen negativen Einfluss auf die Wirkung der Stärke hat bzw. zu Problemen bei der Applikation des Nassspritzbetons durch z.B. Verstopfungen im Düsenbereich. Insbesondere zeigte sich bei Versuchsarbeiten, dass das bereits aus dem Trockenspritzverfahren bekannte Produkt Amitrolit 8865 auch im Nassspritzverfahren zu einer Verminderung des Rückpralls führte, allerdings war die wässrige Lösung von Amitrolit 8865 mit dem Beschleuniger nicht kompatibel, das Produkt bildete Flocken.

Überraschenderweise kompatibel mit dem Beschleuniger war hingegen eine wässrige Lösung von kationisierten Wachsmaisstärke (eine amylopektinreiche kationisierte Maisstärke); die kombinierte Lösung von Beschleuniger und kationisierter Wachsmaisstärke war zwar etwas trüb, jedoch homogen. Die verwendete Wachsmaisstärke hatte einen molaren Substitutionsgrad von etwa 0,4. Dieser Modifizierungsgrad ist eher hoch, der minimale Substitutionsgrad zur Erzielung der gewünschten Rückpralleigenschaften konnte noch nicht ermittelt werden.

Weitere Versuche unter Verwendung von Amitrolit 8865 einerseits sowie einer kationisierter Wachsmaisstärke andererseits, belegten die mögliche Verwendung der beiden Produkte im Nassspritzverfahren. Die Produkte wurden dabei jeweils in wässriger Lösung in der Mischdüse eingespeist.

Aus den Versuchsergebnissen geht hervor, dass die Flockenbildung bei der Mischung einer wässrigen Lösung von Amitrolit 8865 mit dem Beschleuniger vor dem Kontakt mit dem Beton (Parallelzuführung zum Beschleuniger) offenbar keinen Einfluss auf die Wirksamkeit des Polysaccharids hat, jedenfalls unterscheiden sich die Werte bei Verwendung von Amitrolit 8865 nicht wesentlich von jenen bei der Verwendung von kationisierter Wachsmaisstärke. Kationisierte Wachsmaisstärke konnte auch gelöst im Beschleuniger eingesetzt werden (gleichzeitige Zuführung mit dem Beschleuniger). In den Versuchen hat sich ebenfalls gezeigt, dass eine Mindestdosierung von 0,1% Additiv bezogen auf das Zementgewicht zur Verringerung des Rückpralls notwendig ist. Unter diesem Grenzwert scheint die rheologische Modifizierung des Betons durch den Polysaccharidzusatz noch nicht ausreichend zu sein.

Gemäß einer vorteilhaften Ausführungsform der vorliegenden Erfindung wird das Zusatzmittel als wässrige Lösung in den Druckluft-Förderstrom eingebracht. Für einen schnellen und geeigneten Strukturaufbau im Spritzbeton ist es wesentlich, das Zusatzmittel möglichst gleichmäßig in den Druckluft-Förderstrom einzubringen. Obwohl das Zusatzmittel prinzipiell in Pulverform eingebracht werden kann, besteht hierbei doch die grundsätzliche Schwierigkeit, ein Pulver mit einer wässrigen Betonmischung, der ebenfalls ein Beschleuniger zugesetzt wurde, gleichmäßig zu vermischen. Die Zugabe des Zusatzmittels als wässrige Lösung in den Druckluft-Förderstrom verringert diese Schwierigkeiten und führt zu einer gleichmäßigeren Vermischung.

Besonders vorteilhaft ist es, wenn die wässrige Lösung einen Zusatzmittelgehalt von maximal 10% aufweist. Auch bei der Zugabe einer wässrigen Lösung besteht grundsätzlich die Schwierigkeit der gleichmäßigen Vermischung, da das Zusatzmittel die wässrige Lösung verdickt, und auch der Spritzbeton durch die Zugabe des Beschleunigers sofort anzusteifen beginnt. Aus diesem Grund wird der Zusatzmittelgehalt auf maximal 10% begrenzt.

Da das Zusatzmittel in Wasser gelöst ist, wird mit vermehrter Zugabe des Zusatzmittels auch der dem Spritzbeton zugeführte Wassergehalt erhöht. Es wäre daher zu erwarten, dass eine Beimengung des Zusatzmittels als wässrige Lösung die Festigkeitseigenschaften des Nassspritzbetons negativ beeinflussen würde. Die vorstehend erwähnten Versuche haben jedoch überraschender Weise gezeigt, dass durch diese Art der Beimengung die Erfordernisse an den abgegebenen Spritzbeton erfüllt werden.

Das hierin beschriebene Verfahren gibt somit an, wie das Zusatzmittel dem Spritzbeton vor dessen Abgabe durch die Düse zugeführt wird.

Das Nassspritzverfahren funktioniert im Gegensatz zum Trockenspritzverfahren nur, wenn sowohl der Beschleuniger als auch das Zusatzmittel im Bereich der Düse mit dem wässrigen Beton vermischt werden, auch wenn die Kombination des Beschleunigers mit dem Zusatzmittel zu Flockeribildung führt. Bevorzugt wird das Zusatzmittel zwecks verbesserter Vermischung als wässrige Lösung, insbesondere mit maximal 10% Zusatzmittelgehalt, eingebracht. Überraschender Weise führt die Zugabe der wässrigen Lösung zum wässrigen Beton zu keiner Verschlechterung der rheologischen Eigenschaften und der Festigkeitswerte des Spritzbetons.

Es ist eine weitere Aufgabe der Erfindung ein Zusatzmittel für Spritzbeton für die Verwendung in einem Nassspritzverfahren anzugeben.

Erfindungsgemäß wird modifizierte und/oder chemisch derivatisierte, natürliche oder biotechnologisch hergestellte Stärke, gegebenenfalls in Mischung untereinander und mit als Baustoffzusatzmittel bekannten Additiven als Zusatzmittel für Spritzbeton in einem Nassspritzverfahren, verwendet.

Zur Herabsetzung des Rückpralls sowie vorzugsweise zur Regelung des W/Z-abhängigen Fließverhaltens des Spritzbetons während der Verarbeitung wird erfindungsgemäß für ein Zusatzmittel für Spritzbeton modifizierte und/oder chemisch derivatisierte natürliche oder biotechnologisch hergestellte Stärke, gegebenenfalls in Mischung untereinander und mit als Baustoffzusatzmittel bekannten Additiven, verwendet.

Unter modifizierter Stärke wird in der Fachliteratur und gemäß vorliegender Erfindung Stärke verstanden, die durch physikalische oder chemische bzw. enzymatische Reaktion behandelt wird und in eine kaltwasserquellende oder kaltwasserlösliche Form übergeführt wurde. Zu den bekannten Verfahren zur Modifizierung gehören z.B. Walzentrocknung, Extrusion, Sprühtrocknung bzw. - kochung, Dextrinierung, Behandlung in Gemischen von wassermischbaren organischen Lösungsmitteln (z.B. niederen Alkoholen) und Wasser mit Wärme und/oder alkalischen Bedingungen. Die Stärke kann dabei depolymerisiert werden.

Weiters kann eine Depolymerisation durch oxidativen, thermochemischen oder säurekatalytischen Abbau oder sehr häufig durch ein oder mehrere enzymatische Verfahrensschritte oder eine Kombination hievon erreicht werden.

Unter chemischen Derivaten sind jene Reaktionsprodukte zu verstehen, die mit oder ohne vorhergehender Aufschluss- oder Abbaureaktionen durch Umsetzung mit Reagentien, die neue Substituenten in die Polymerkette der Stärke einführen, erhalten werden. Die Produkte solcher Reaktionen sind substituierte Polysaccharide, deren Substituenten über kovalente Ester- und/oder Etherbindungen an die Polymerkette gebunden sind. Bevorzugt sind z.B. Methyl-, Ethyl Propyl-, Hydroxyethyl-, Hydroxybutyl-, Carboxymethyl-, Cyanoethyl-, Carbamoylethylethergruppen oder deren Gemische, Estergruppen mit organischen Mono-, Di- oder Tricarbonsäuren mit einer Kettenlänge von C1-C25 sowie Ether- oder Estergruppen mehrbindiger Reaktionsmittel, die zur Vernetzung der Polymerketten führen (z.B. Epichlorhydrin, Trimetaphosphat, Phosphoroxychlorid, Zitronensäure, Adipinsäure, usw.).

Unter kationischer Modifizierung der Stärken werden jene Derivate zusammengefasst, wo durch Substitution eine positive Ladung in die Stärke eingebracht wird. Die Kationisierungsverfahren erfolgen mit Amino-, Imino-, Ammonium-, Sulfonium- oder Phosphoniumgruppen. Methoden zur Herstellung von kationisierten Stärken sind beispielsweise von D.B. Solareck: Cationic Starches, in dem Buch von O.B. Wurzburg (Hrsg.): Modified Starches: Properties and Uses, CRC Press Inc., Boca Raton, Florida (1986), S. 113 - 130, beschrieben. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind. Bevorzugt ist der Einsatz von kationisierten Stärken, die elektropositiv geladene quaternäre Ammoniumgruppen enthalten.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen oder durch Xanthate zusätzlich modifiziert werden. Eine Darstellung zur Herstellung solcher Produkte ist ebenfalls von D.B. Solareck: Cationic Starches, in dem Buch von O.B. Wurzburg (Hrsg.): Modified Starches: Properties and Uses, CRC Press Inc., Boca Raton, Florida (1986), S. 113-130, beschrieben.

Stärken können auch über Hydrophobierungsreagenzien modifiziert werden. Veretherte hydrophobe Stärken erhält man dabei, wenn die hydrophoben Reagenzien als funktionelle Gruppe ein Halogenid, ein Epoxid, ein Glycidyl, ein Halogenhydrin, eine Carbonsäure oder eine quaternäre Ammoniumgruppe enthalten. Für veresterte hydrophobe Stärken enthält das hydrophobe Reagens zumeist ein Anhydrid. Die angeführten Reaktionen können dabei auch unter Anwesenheit eines Tensides ablaufen. Eine Hydrophobierung der Stärke kann auch über eine Abmischung einer Stärke oder eines Stärkederivates mit Fettsäureester erfolgen.

Verfahren zur Derivatisierung von Stärke zur Herstellung von Ethern und Estern allgemein sind in der Fachwelt gut bekannt und werden z.B. in O.B. Wurzburg (Ed.): Modified Starches: Properties and Uses, CRC Press Inc., Boca Raton, Florida, 1986, Kap. 4, 5 und 6, beschrieben. Eine bevorzugte Stärkeveretherungsreaktion ist die Hydroxyalkylierung durch Umsetzung mit Alkylenoxiden (Ethylenoxid, Epoxypropan, Epoxybutan, Epoxypentan, Epoxyhexan), wobei Propoxylierung besonders bevorzugt ist.

Besonders wirksam im Sinne der Erfindung verhalten sich die Etherderivate der Stärke mit einem tatsächlichen (d.h. gemessenen) molaren Substitutionsgrad von 0,1 bis 1, bevorzugt von 0,2 bis 0,7.

Die Veresterung der Stärke kann z.B. durch Reaktion mit Anhydriden von organischen Säuren, vor allem Monocarbonsäuren, erreicht werden. Bevorzugt ist die Bildung von Stärkeestern des Typs Acetat-, Propionat- und Butyratstärke.

Die Stärke kann aus Knollen oder Wurzeln (Kartoffelstärke, Sagostärke, Tapiokastärke usw.) ebenso wie aus Getreide (Maisstärke, Wachsmaisstärke, Weizenstärke, Reisstärke usw.) oder aus Früchten (Erbsenstärke usw.) stammen.

Eine spezielle Ausführungsform der vorliegenden Erfindung besteht darin, dass die erfindungsgemäß im Nassspritzverfahren verwendete Stärke eine Amylopektin-reiche Stärke, insbesondere eine Amylopektin-Kartoffelstärke oder Wachsmaisstärke, ist.

Amylopektin-reiche Stärke ist eine Stärke mit einem im Verhältnis zu konventioneller Stärke vermindertem Amylosegehalt. Bevorzugt enthält die Amylopektin-reiche Stärke weniger als 20%, insbesondere 0% bis 8%, am besten nur 0% bis 3% Amylose.

Bevorzugt liegt die erfindungsgemäß verwendete Stärke, in einer besonderen Ausführungsform Amylopektin-reiche Stärke, in hydroxyalkylierter bzw. alkylveresterter Form oder kationisierter Form vor, bevorzugt mit einem Hydroxyalkylierungsgrad, Alkylveresterungs- bzw. Kationisierungsgrad(MS) von 0,1 bis 1, insbesondere von 0,2 bis 0,7.

Die Länge der Kohlenstoffketten in den Hydroxyalkyl- bzw. Alkylestergruppen liegt bevorzugt im Bereich von 1 bis 6 Kohlenstoffatomen.

In wässrigem Medium bilden alle genannten modifizierten und/oder chemisch derivatisierten Stärken Hydrokolloide, die die Eigenschaften der damit versetzten Spritzbetonmassen im gewünschten Sinne verändern. Sie bewirken im Nassspritzverfahren eine deutliche Verminderung des Rückpralls.

Die neuen Zusatzmittel sind mit allen dem Fachmann bekannten Zusatzstoffen sehr gut verträglich und beliebig kombinierbar.

Beispiele:

Beispiel 1: Betonrezeptur

Der Beton wird auf einen Wasser/Zement-Wert (W/Z) von 0,5 und ein Ausbreitmaß (ABM) von 65cm (EN12350) eingestellt.

| Produkt | Menge [kg] |
|---|---|
| CEM II/A-M 42,5 R | 504 |
| Wasser | 160 |
| Muraplast FK 63,1 | 2,6 |
| LP Zentrizell AIR | 2,4 |
| Natursand 0/4 mm | 1614 |
| Kies/Roller 4/8 mm | 521 |

Beispiel 2: Konsistenzprüfungen am Frischbeton

Die Konsistenz des Betons wird über das Ausbreitmaß (ABM) gemäß EN12350 ermittelt. Zu steife Betone sind nicht mehr verarbeitbar, die Einmischung eines Beschleunigers an der Düse ist ebenfalls erschwert. Dadurch scheidet die Zugabe der genannten Stärkeprodukte Amitrolit 8865 und kationische Wachsmaisstärke zu jedem Zeitpunkt vor der Düse aus, da ansonsten der Beton vorzeitig ansteift.

| | ABM | Konsistenz | Pumpbarkeit |
|---|---|---|---|
| ohne Stärke | 65cm | Fließfähig, optimal | + |
| 0,1% Amitrolit 8865 | 38cm | Sehr steif | - |

(fortgesetzt)

|  | ABM | Konsistenz | Pumpbarkeit |
|---|---|---|---|
| 0,1% kationische Wachsmaisstärke | 42cm | Sehr steif | - |
| 0,1% unmodifizierte kaltquellende Wachsmaisstärke | 63 | fließfähig | + |

Beispiel 3: Kationisierung von Stärke

Wachsmaisstärke Maisita 21.007 (AGRANA Stärke GmbH.) wird mit Wasser zu einem 40%igen Slurry angerührt und mit dem Kationisierungsmittel Quab 151 (SKW Metallurgie, QUAB Chemicals) versetzt. Nach Zugabe von NaOH wird auf 70-80°C erwärmt und die Reaktion für 5 Stunden durchgeführt (Ansatzparameter Tabelle 1). Nach dem Neutralisieren mit Salzsäure wird das Produkt mittels Walzentrocknung getrocknet und zu einem Pulver vermahlen (Tabelle 2).

Tabelle 1: Herstellverfahren

|  | Menge [kg] |
|---|---|
| Wachsmaisstärke Maisita 21007 | 2 |
| Natronlauge 50%ig | 0,24 |
| QUAB151 (Aktivität 62%) | 1,5 |

Tabelle 2: Produktcharakterisierung

|  | Kationische Wachsmaisstärke |
|---|---|
| Viskosität 10%ig (Brookfield, 100upm) | 90 mPas |
| Kationisierungsgrad DS | Ca. 0,4 |
| pH (10%ige Lösung) | 6 |

Beispiel 4: Spritzversuche

Für die Spritzversuche wurde ein Beton mit der Zusammensetzung aus Beispiel 2 verwendet. Der Beton wurde aus einem Betonmischwagen direkt in die Betonpumpe zugegeben und von dort im Dichtstrom zur Düse gefördert. An der Düse wurden die Stärkeprodukte und der Beschleuniger hinzugefügt.

Der Beton wurde mittels Druckluft beschleunigt und eine raue Betonplatte von 1m x 1m schräg über Kopf appliziert. Gemessen wurde die gesamte eingesetzte Betonmenge sowie das rückprallende Material. Letzteres wurde unterhalb der Spritzplatte gesammelt und ausgewogen. Daraus wurde der bezogene Rückprall wie folgt ermittelt:

$$\text{Bezogener Rückprall in \%} = M_{RP}/M_B$$

$M_{RP}$    - Masse des rückprallenden Materials
$M_B$    - Masse der eingesetzten Betonmenge

| Additiv | Dosierung [% bezogen auf Zement] | Bezogener Rückprall [%] |
|---|---|---|
| Ohne Additiv (Referenz) | - | 15 |
| Amitrolit 8865 | 0,2 | 10 |
| Kationische Wachsmaisstärke | 0,2 | 10,5 |
| Unmodifizierte kaltquellende Wachsmaisstärke | 0,2 | 15-16 |

Als Beschleuniger wurde MAPEIQUICK 043FFG (MAPEI GmbH.) in einer Dosiermenge von ca. 8% verwendet. Die Stärkeprodukte wurden als wässrige Lösung in der Spritzdüse zugegeben.

**Patentansprüche**

1. Nassspritzverfahren zur Herstellung von Spritzbeton unter Verwendung von modifizierter und/oder chemisch derivatisierter, natürlicher oder biotechnologisch hergestellter Stärke, gegebenenfalls in Mischung untereinander und mit als Baustoffzusatzmittel bekannten Additiven als Zusatzmittel, wobei das Zusatzmittel gleichzeitig mit einem Beschleuniger im Bereich einer den Spritzbeton abgebenden Düse in einen den wässrigen Beton transportierenden Druckluft-Förderstrom eingebracht wird.

2. Verfahren nach Anspruch 1, **dadurch gekennzeichnet, dass** das Zusatzmittel als wässrige Lösung in den Druckluft-Förderstrom eingebracht wird.

3. Verfahren nach Anspruch 2, **dadurch gekennzeichnet, dass** die wässrige Lösung einen Zusatzmittelgehalt von maximal 10% aufweist.

4. Verwendung von modifizierter und/oder chemisch derivatisierter, natürlicher oder biotechnologisch hergestellter Stärke, gegebenenfalls in Mischung untereinander und mit als Baustoffzusatzmittel bekannten Additiven als Zusatzmittel für Spritzbeton in einem Nassspritzverfahren nach einem der Ansprüche 1 bis 3.

5. Verwendung nach Anspruch 4, **dadurch gekennzeichnet, dass** die Stärke kaltwasserquellend oder kaltwasserlöslich ist.

6. Verwendung nach Anspruch 4 oder 5, **dadurch gekennzeichnet, dass** die Stärke depolymerisiert ist.

7. Verwendung nach einem der Ansprüche 4 bis 6, **dadurch gekennzeichnet, dass** die Stärke durch Einbau von Ester- und/oder Ethergruppen derivatisiert ist.

8. Verwendung nach Anspruch 7, **dadurch gekennzeichnet, dass** die Etherderivate der Stärke einen tatsächlichen molaren Substitutionsgrad von 0, 1 bis 1, bevorzugt von 0,2 bis 0,7, aufweisen.

9. Verwendung nach Anspruch 7 oder 8, **dadurch gekennzeichnet, dass** das Stärkederivat Methyl-, Ethyl-, Propyl-, Hydroxyethyl-, Hydroxypropyl-, Hydroxybutylether-, Carboxymethylether-, Cyanoethylether-, Carbamoylether- oder quaternäre Ammoniumgruppen enthält.

10. Verwendung nach Anspruch 7, **dadurch gekennzeichnet, dass** das Stärkederivat Estergruppen mit organischen Mono-, Di- oder Tricarbonsäuren mit einer Kettenlänge von 1 bis 25 Kohlenstoffatomen enthält.

11. Verwendung nach einem der Ansprüche 4 bis 10, **dadurch gekennzeichnet, dass** die Stärke Ether- oder Estergruppen mehrbindiger Reaktionsmittel enthält und die Polymerketten insbesondere mit Epichlorhydrin, Trimetaphosphat, Phosphoroxychlorid, Zitronensäure, Adipinsäure vernetzt sind.

12. Verwendung nach einem der Ansprüche 4 bis 11, **dadurch gekennzeichnet, dass** die Stärke zur kaltwasserquellenden oder kaltwasserlöslichen Form aufgeschlossen ist und zusätzlich eine Derivatisierung durch Methyl-, Ethyl-, Propyl-, Hydroxyethyl-, Hydroxypropyl-, Hydroxybutyl-, Carboxymethyl-, Cyanoethyl- oder Carbamoylethylethergruppen oder Gemische derselben und gegebenenfalls zusätzlich eine Substitution durch Esterbindungen und/oder eine Vernetzung aufweist.

13. Verwendung nach Anspruch 4, **dadurch gekennzeichnet, dass** die Stärke eine modifizierte und/oder chemisch derivatisierte Amylopektin-reiche Stärke ist.

14. Verwendung nach Anspruch 13, **dadurch gekennzeichnet, dass** die Amylopektin-reiche Stärke einen Amylosegehalt von weniger als 20%, insbesondere von 0% bis 8%, am besten von 0% bis 3%, aufweist.

**Claims**

1. Wet spraying method for producing sprayed concrete using modified and/or chemically derivatized, naturally or biotechnologically produced starch, optionally both mixed together and containing additives known as admixtures for building materials as an admixture, wherein said admixture and an accelerator are simultaneously introduced in the vicinity of a sprayed concretedischarging jet into a compressed-air discharge carrying the aqueous concrete.

2. Method according to claim 1, **characterized in that** said admixture is introduced into the compressed-air discharge in the form of an aqueous solution.

3. Method according to claim 2, **characterized in that** said aqueous solution has a maximum admixture content of 10%.

4. Use of modified and/or chemically derivatized, naturally or biotechnologically produced starch, optionally both mixed together and containing additives known as admixtures for building materials as an admixture for sprayed concrete in a wet spraying method according to any one of claims 1 to 3.

5. Use according to claim 4, **characterized in that** the starch is swellable or soluble in cold water.

6. Use according to claim 4 or 5, **characterized in that** the starch is depolymerized.

7. Use according to any one of claims 4 to 6, **characterized in that** the starch is derivatized by the integration of ester groups and/or ether groups.

8. Use according to claim 7, **characterized in that** the ether derivatives of starch have an actual molar degree of substitution of 0.1 to 1, preferably of 0.2 to 0.7.

9. Use according to claim 7 or 8, **characterized in that** the starch derivative contains methyl groups, ethyl groups, propyl groups, hydroxyethyl groups, hydroxypropyl groups, hydroxybutyl ether groups, carboxymethyl ether groups, cyanoethyl ether groups, carbamoyl ether groups or quaternary ammonium groups.

10. Use according to claim 7, **characterized in that** the starch derivative contains ester groups having organic mono-, di-, or tricarboxylic acids with a chain length of 1 to 25 carbon atoms.

11. Use according to any one of claims 4 to 10, **characterized in that** the starch contains ether groups or ester groups of polyvalent reactants and the polymer chains are, in particular, crosslinked with epichlorohydrine, trimetaphosphate, phosphorus oxychloride, citric acid or adipic acid.

12. Use according to any one of claims 4 to 11, **characterized in that** the starch is solubilized to give its cold water-swellable or cold water-soluble form and is additionally derivatized by methyl groups, ethyl groups, propyl groups, hydroxyethyl groups, hydroxypropyl groups, hydroxybutyl ether groups, carboxymethyl ether groups, cyanoethyl ether groups, carbamoyl ether groups or mixtures thereof and optionally has an additional substitution by ester bonds and/or a cross-linkage.

13. Use according to claim 4, **characterized in that** the starch is a modified and/or chemically derivatized amylopectinrich starch.

14. Use according to claim 13, **characterized in that** the amylopectin-rich starch has an amylose content of less than 20%, in particular of 0% to 8%, most preferably of 0% to 3%.

**Revendications**

1. Procédé de pulvérisation humide pour la préparation de béton projeté en utilisant des amidons modifiés et/ou chimiquement dérivés, préparés par voie naturelle ou biotechnologique, éventuellement en mélange et avec des additifs connus comme adjuvants de matériaux de construction en tant qu'adjuvants, l'adjuvant étant introduit simultanément avec un activateur dans un domaine d'une des buses délivrant le béton projeté dans un courant d'acheminement à air comprimé transportant le béton aqueux.

**2.** Procédé selon la revendication 1, **caractérisé en ce que** l'adjuvant est introduit comme solution aqueuse dans le courant d'acheminement à air comprimé.

**3.** Procédé selon la revendication 2, **caractérisé en ce que** la solution aqueuse présente une teneur en adjuvant au maximum de 10 %.

**4.** Utilisation d'amidons modifiés et/ou chimiquement dérivés, préparés par voie naturelle ou biotechnologique, éventuellement en mélange et avec des additifs connus comme adjuvants de matériaux de construction en tant qu'adjuvants pour du béton projeté dans un procédé de pulvérisation humide selon l'une quelconque des revendications 1 à 3.

**5.** Utilisation selon la revendication 4, **caractérisée en ce que** l'amidon gonfle dans l'eau froide ou est soluble dans l'eau froide.

**6.** Utilisation selon la revendication 4 ou 5, **caractérisée en ce que** l'amidon est dépolymérisé.

**7.** Utilisation selon l'une quelconque des revendications 4 à 6, **caractérisée en ce que** l'amidon est dérivé par incorporation de groupes ester et/ou éther.

**8.** Utilisation selon la revendication 7, **caractérisée en ce que** les dérivés éther des amidons présentent un degré de substitution molaire réel de 0,1 à 1, de préférence de 0,2 à 0,7.

**9.** Utilisation selon la revendication 7 ou 8, **caractérisée en ce que** le dérivé d'amidon contient des groupes méthyle, éthyle, propyle, hydroxyéthyle, hydroxypropyle, hydroxybutyléther, carboxyméthyléther, cyanoéthyléther, carbamoyléther ou ammonium quaternaire.

**10.** Utilisation selon la revendication 7, **caractérisée en ce que** le dérivé d'amidon contient des groupes ester avec des acides mono-, di- ou tri-carboxyliques organiques avec une longueur de chaîne de 1 à 25 atomes de carbone.

**11.** Utilisation selon l'une quelconque des revendications 4 à 10, **caractérisée en ce que** l'amidon contient des groupes éther ou ester de réactifs multivalents et les chaînes polymères sont réticulées en particulier avec de l'épichlorhydrine, du trimétaphosphate, du phosphoroxychlorure, de l'acide citrique, de l'acide adipique.

**12.** Utilisation selon l'une quelconque des revendications 4 à 11, **caractérisée en ce que** l'amidon est désagrégé jusqu'à une forme gonflant dans l'eau froide ou se dissolvant dans l'eau froide et présente de plus une dérivatisation par des groupes méthyle, éthyle, propyle, hydroxyéthyle, hydroxypropyle, hydroxybutyle, carboxyméthyle, cyanoéthyle ou carbamoyléthyléther ou des mélanges de ceux-ci et éventuellement de plus une substitution par des liaisons ester et/ou une réticulation.

**13.** Utilisation selon la revendication 4, **caractérisée en ce que** l'amidon est un amidon riche en amylopectine modifié et/ou chimiquement dérivé.

**14.** Utilisation selon la revendication 13, **caractérisée en ce que** l'amidon riche en amylopectine présente une teneur en amylose inférieure à 20 %, en particulier de 0 % à 8 %, encore mieux de 0 % à 3 %.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9614275 A
- JP 03223139 A
- JP 05105493 A
- AT 403277 B
- EP 0076927 A1
- EP 0824093 B1

**In der Beschreibung aufgeführte Nicht-Patentliteratur**

- Cationic Starches. **D.B. SOLARECK.** Modified Starches: Properties and Uses. CRC Press Inc, 1986, 113-130
- Cationic Starches. **D.B. SOLARECK.** Modified Starches: Properties and Uses. CRC Press Inc, 1986, 113-130
- Modified Starches: Properties and Uses. CRC Press Inc, 1986